# EUROPEAN PATENT SPECIFICATION

(11) **EP 1 325 353 B1**
(45) Date of publication and mention of the grant of the patent: **23.01.2008**
(21) Application number: 01972869.0
(22) Date of filing: 02.10.2001
(51) Int. Cl.: G01S 13/94, G01C 21/00

(54) **ADAPTATIVE MODELING OF SURFACE NOISE DURING REMOTE DISTANCE MEASUREMENT**
ADAPTIVE MODELLIERUNG VON OBERFLÄCHENRAUSCHEN BEI FERNDISTANZMESSUNGEN
MODELISATION ADAPTATIVE DU BRUIT DE SURFACE EN COURS DE TELEMESURE

(30) Priority: 13.10.2000 SE 0003713
(43) Date of publication of application: 09.07.2003
(73) Proprietor: SAAB AB, 581 88 Linköping (SE)
(72) Inventor: NEREGÅRD, Fredrik, S-587 34 Linköping (SE); PERSSON, Niklas, S-433 62 Sävedalen (SE); SVENSSON, Martin, SE-589 35 Linköping (SE)
(74) Representative: Holmberg, Magnus
(86) International application number: PCT/SE2001/002133
(87) International publication number: WO 2002/031533

(56) References cited:
- GB-A- 2 315 941
- US-A- 5 892 462
- US-A- 6 094 607
- PUCAR P. ET AL.: 'Saab NINS/NILS-an autonomous landing system for gripen' IEEE 2000 POSITION LOCATION AND NAVIGATION SYMPOSIUM 13 March 2000 - 16 March 2000, pages 254 - 261, XP002906839

## Description

### THE BACKGROUND OF THE INVENTION AND PRIOR ART

The present invention relates generally to navigating crafts by means of remote distance measurement, where the noise generated by the surface is modeled adaptively. More particularly the invention relates to a method and an apparatus according to the preambles of claim 1 and claim 10 respectively. The invention also relates to a computer program for performing the method according to claim 1 and a computer readable medium having such program recorded thereon.

It is generally known to utilize radar technology to determine the distance and bearing to objects (radar = radio detecting and ranging). By performing doppler detection it is also possible to determine radial velocity relationships between the radar and the registered objects.

The patent document GB, A, 2315941 describes a radar altimeter for an aircraft, which makes possible both detection of the highest objects on the ground, such as buildings and trees, and the actual ground surface.

The patent document US, A, 5892462 discloses a method for adaptive in-flight collision avoidance of objects on the ground. A desired air route is checked against a database in order to determine whether the route involves a collision risk with respect to objects on the ground. If deemed necessary, an alternative route is calculated and presented, which avoids the risk of colliding with objects on the ground.

The article "Saab NINS - An automated Navigation System", by P. Bergljung et al, 1 November, 1999, No. A, Saab Dynamics AB, describes how an aircraft can be navigated based on the appearance of the surface over which the aircraft moves. A radar altimeter in the aircraft sends signals towards the surface and determines the altitude over the surface by analyzing the signals being reflected against the surface. Information in a database pertaining to the surface's elevation in the area within which the aircraft is located is compared with a latest measured elevation of the surface. Conclusions can thereby be drawn as to the aircraft's position.

A so-called measurement shell represents an uncertainty volume with a predetermined thickness within which the aircraft is estimated to be located. By repeating the measurements and updating the measurement shell, the measurement shell can successively be limited and the aircrafts position can be determined with a higher accuracy. A so-called terrain reference navigation filter, which utilizes a radar altimeter and which has been proposed by the applicant, assumes certain characteristics of the noise being associated with the radar measurement. The noise is thereby supposed to be due to the fact that the measurement occasionally is not performed with respect to the actual ground surface, but against objects being located on the surface, such as trees, posts and masts. In order to make the terrain reference navigation filter independent of such noise, the measurement shell is selected with such thickness that the aircraft certainly can be said to be located within the measurement shell irrespective of the noise.

Radar altitude measurement is also susceptible to a varying noise due to the surface's varying capability to reflect radar signals. Radar signals are in the highest degree reflected and attenuated depending on the material and appearance of the surface. Furthermore, the surface structure and its possible cover of vegetation influences how radar echoes are generated.

For reasons of precision it is naturally desirable to minimize the uncertainty area when determining the position for a craft. Thus, the measurement shell should be made as limited as possible.

If, however, the thickness of the measurement shell falls below the height of the objects that are located on the surface there is a risk that the terrain reference navigation filter will diverge, i.e. generate increasingly erroneous positional information.

The yet known solutions model the measurement noise, which depends on the characteristics of the surface according a presumption that the noise has a static distribution. Such model cannot take into account various surfaces different characteristics with respect to reflecting radar signals. Instead, one and the same model must be capable of describing all possible surface types simultaneously. This results in sub-optimal performance of the terrain reference navigation filter, particularly when the craft operates over a surface that generates a relatively small amount of noise.

### SUMMARY OF THE INVENTION

The object of the present invention is to alleviate the above problems and thereby improve the precision as well as the robustness of per se earlier known solutions for remote distance measurement based terrain navigation.

According to one aspect of the invention the object is achieved by a method for navigating a craft by means of remote distance measurement as initially described, wherein a measurement noise model is employed that for particular geographical positions designates the surface's inclination to cause measurement noise when performing a distance measurement.

According to another aspect of the invention the object is achieved by a computer program, which is directly loadable into the internal memory of a computer, comprising software for performing the steps of any of the method described in the above paragraph, when said program is run on the computer.

According to yet another aspect of the invention the object is achieved by a computer readable medium, having a program recorded thereon, where the program is to make a computer perform the method proposed in the penultimate paragraph above.

According to still another aspect of the invention the object is achieved by an apparatus for navigating a craft as initially described, wherein the database stores a measurement noise model, which for each geographical position designates an estimation of the surface's inclination to cause measurement noise when performing the distance measurement against the surface. A control unit in the apparatus then utilizes the measurement noise model when calculating the craft's geographical position.

The proposed solution improves both the precision and the reliability during position determination by means of remote distance measurement. This, in turn, results in that the traffic security can be improved in any kind of craft traffic where such positioning is utilized, such as in aircraft navigation and marine navigation, on as well as below the water surface.

### BRIEF DESCRIPTION OF THE DRAWINGS

The present invention is now to be explained more closely by means of preferred embodiments, which are disclosed as examples, and with reference to the attached drawings.
- Figure 1: illustrates how an aircraft equipped with an apparatus according to the invention passes over a terrain segment whereby a first step of a per se known procedure for determining the craft's geographical position is effected,
- Figure 2: shows a later stage of the procedure for determining the craft's geographical position,
- Figure 3: shows yet a later stage of the procedure according to figure 1,
- Figures 4a-c: illustrate a method for modeling surface noise during remote distance measurement according to a first embodiment of the invention,
- Figure 5: further illustrates the method according to the first embodiment of the invention, which is described with reference to the figures 4a-c,
- Figure 6: illustrates a method for modeling surface noise during remote distance measurement according to a second embodiment of the invention,
- Figure 7: illustrates by means of a flow chart the general method according to the invention, which preferably is controlled by a computer program, and
- Figure 8: illustrates an embodiment of an apparatus according to the invention.

### DESCRIPTION OF PREFERRED EMBODIMENTS OF THE INVENTION

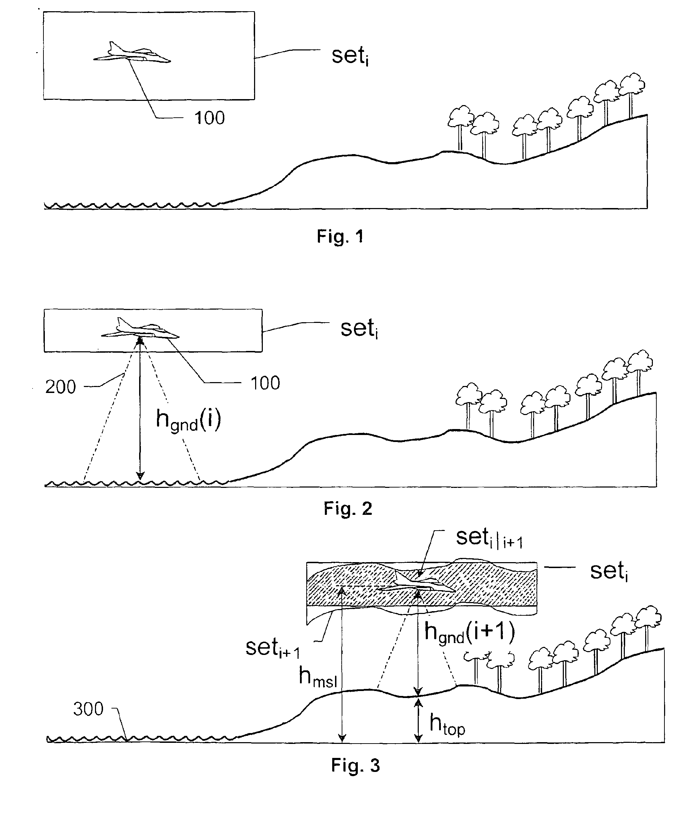

Figure 1 shows an aircraft 100, which is equipped with an apparatus according to the invention. The aircraft 100 passes over a terrain segment when the proposed apparatus is activated and a procedure for determining the aircraft's 100 position is instigated. Initially, a measurement shell setᵢ is assumed, which has a maximum size and typically is a cylindrical volume being several kilometers in width and whose height is arbitrary, within which the aircraft 100 is presumed to be located.

Figure 2 illustrates how the apparatus in the aircraft 100 in a later stage of the procedure for determining the aircraft's 100 position performs a radar altitude measurement, through which the aircraft's distance in height above the surface is determined. The apparatus includes a radar whose transmitter- and receiver antennae have relatively large lobe angles (e.g. 40°-60°). In the figure, however, for reasons of clarity, a substantially smaller lobe angle is shown. The transmitter antenna transmits a radar and the receiver antenna, which may be identical with the transmitter antenna, receives a reflected signal. The time difference between the transmitted signal and the received signal constitutes a measure of the distance h_{gnd}(i) between the aircraft 100 and the object that reflected the transmitted signal, since the radar signal is presumed to propagate at a constant and known speed, namely the speed of light. According to a basic assumption, it is the ground below the aircraft 100 that has reflected the transmitted signal. The aircraft 100 is thus expected to be located at a distance h_{gnd}(i) above the ground.

By the radar altitude measurement the measurement shell setᵢ can be reduced in height to a particular thickness. This thickness is stipulated by an estimated uncertainty in height in the radar altitude measurement. The height of any objects located on the surface (in this case the water surface) places a limit as to the thickness of the measurement shell setᵢ. The precision of the radar altitude measurement is hence determined by the modeling of the surface's capability to reflect radar signals. According to the earlier known solutions the lower limit for the thickness of the measurement shell setᵢ has been put equal to the height of the highest expected objects on the ground. A decrease of the measurement shell's setᵢ thickness below this limit has jeopardized the robustness of the measurement method, and eventually reduced the precision in the position determination.

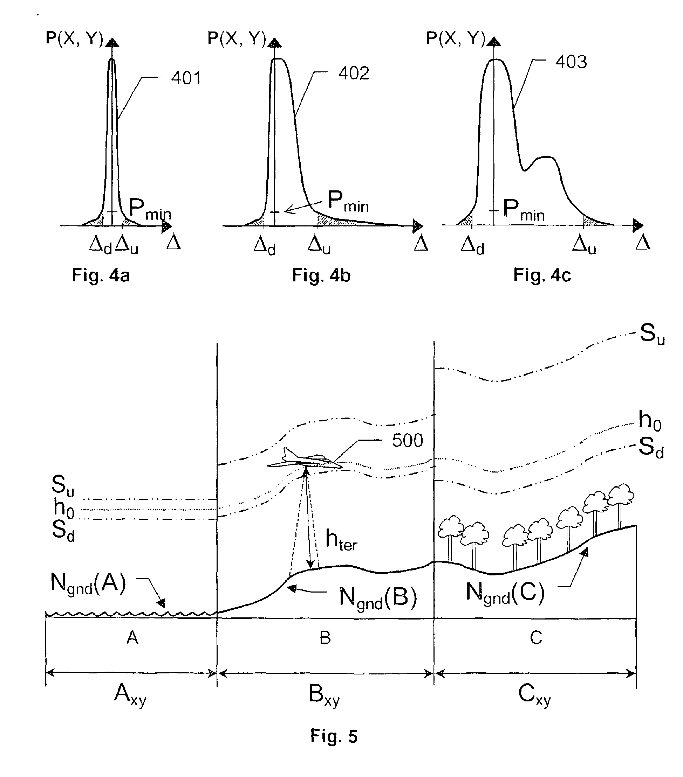

Figure 3 shows a yet later stage of the procedure for determining the aircraft's 100 position, when another radar altitude measurement is performed. The height reduced measurement shell setᵢ is expanded to some extent in order to take into consideration the uncertainty in position being introduced due to the movement of the aircraft 100. Furthermore, the measurement shell set is shifted a distance, which corresponds to the aircraft's 100 estimated movement since the previous radar altitude measurement. Sensors in the aircraft 100, for instance in the form of inertial gyros, accelerometers and pressure meters can be used to register such movement. The invention proposes that the thickness of the measurement shell is determined adaptively according to a method, which will be described in further detail with reference to the figures 4 - 7 and an apparatus illustrated in figure 8.

The renewed radar altitude measurement provides an updated value of the distance estimation h_{gnd}(I+1) to the ground. A new measurement shell setᵢ₊₁ based on this estimation is assumed. When determining the aircraft's 100 position an assumption is made that on one hand (a) the aircraft is located within the shifted and expanded measurement shell setᵢ and on the other hand (b) the aircraft is located within the new measurement shell setᵢ₊₁, which was obtained via the latest radar altitude measurement. The aircraft 100 is thus presupposed to be located within a cut volume set_{i|i+1}, which overlaps the shifted and expanded measurement shell setᵢ as well as the latest measurement shell setᵢ₊₁. The aircraft's 100 position can thereby be estimated with an accuracy corresponding to the cut volume set_{i|i+1}.

A further refined position determination for the aircraft 100 can be obtained by means of repeated measurements of the aircraft's movement, repeated radar altitude measurements and comparisons with registered information pertaining to the ground's elevation hₜₒₚ over the mean sea level at particular geographical positions. Furthermore, an estimation of the aircraft's 100 elevation hₘₛₗ over the mean sea level 300 can be acquired according to the relationship hₘₛₗ = hₜₒₚ + h_{gnd}(i+1).

Typically, the ground's actual elevation hₜₒₚ over the mean sea level is assumed to be registered at certain geographical positions in an orthogonal check pattern with 50 meters distance in each direction between two neighboring coordinate points. This information is stored in a database in the aircraft 100. An estimation of the ground's elevation between the stored positions is preferably calculated by means of bi-linear interpolation.

It has been shown that the deviation Δ, with respect to both magnitude and sign, between the actual values of the ground's elevation over the mean sea level and the measured values vary substantially depending on the ground's type of bed in a particular terrain segment. Figure 4a shows a diagram 401 over the deviation Δ between the actual elevation values and the measured elevation values when the ground bed is a "water surface", such as the open sea, a lake or a larger watercourse. The X-axis indicates the magnitude of the deviation Δ and the Y-axis reflects, in principle, the number of registered deviations of a particular magnitude. The number of registered deviations has, however, here been standardized, such that a histogram is obtained, which indicates an estimated probability P(X,Y) for a given deviation when performing a radar altitude measurement at a position X,Y, where the ground bed is a "water surface". As can be seen, the deviation Δ is always relatively small for this type of ground bed. Naturally, this is can be explained by the distance between trough and the crest of the waves is comparatively small, also when there is a rough sea.

Figure 4b shows a diagram 402 over the deviation Δ between actual and measured elevation values when the ground bed is "open terrain", such as cultivated land, meadow-land or other types of ground with low and relatively uniform vegetation. Also here the estimated probability P(X,Y) for a particular deviation Δ when performing a radar altitude measurement at a position X,Y is represented in histogram form. In similarity with "water surface", the ground bed type "open terrain" shows a relatively small variation in deviation Δ due to the surface noise.

However, "woodland", i.e. ground covered with high and mainly inhomogeneous vegetation including trees and shrubs, shows a relatively large variation in the deviation Δ between actual and measured elevation values. This is illustrated in figure 4c by means of a diagram 403. Again a histogram represents an estimated probability P(X,Y) for a particular deviation Δ when performing a radar altitude measurement at a position X,Y. Along the X-axis, the magnitude of the deviation Δ is indicated, which of course can assume relatively large positive values (when measuring against, for example, tree tops) as well as relatively large negative values (when measuring in pits or other depressions) which are neither registered in the database nor can be modeled adequately by means of interpolation between registered coordinate points.

A lowest probability Pₘᵢₙ has been given in all diagrams 4a, 4b and 4c that denotes a value below which the probability for a deviation Δ in practical conditions can be approximated to zero, i.e. corresponding to an upper maximum deviation Δᵤ respective a lower maximum deviation Δ_{d}. Theoretically, however, there is no problem with defining the probability function P(X,Y) for arbitrarily large deviations Δ.

It is undoubtedly possible to model the measurement noise being caused when performing radar altitude measurements against several ground bed types in addition to those mentioned above. In principle, there is no limitation as to the number of modeled ground bed types. However, practically it is often appropriate to define a model for "other ground", which is allocated to all terrain segments that cannot be arranged in any of the other categories (in this example "water surface", "open terrain" or "woodland"). The probability function for the "other ground" should have a distribution between an upper maximum deviation Δᵤ and a lower maximum deviation Δ_{d}, whose average value lies above zero. The difference between the upper maximum deviation Δᵤ and the lower maximum deviation Δ_{d}, should be set to a value being adapted to the corresponding values for the other ground bed types used. In the above described example, it would be appropriate to assume a difference between Δᵤ and Δ_{d} for "other ground", which is larger than the corresponding difference for "open terrain", but less than the corresponding difference for "woodland".

When performing remote distance measurements from other types of crafts than aircrafts, such as submarines, a completely different set of ground bed / surface types must, of course, be used, which are modeled by means of different probability distributions. Nevertheless, the principle is the same irrespective of the type of remote distance measurement, craft type, medium of transportation or ground bed / surface type.

Figure 5 shows, by way of a practical example, how the proposed method for surface noise modeling is realized according to the embodiment of the invention, which has been described with reference to the figures 4a-c above. The figure shows a terrain segment comprising three different ground bed types A, B and C, which represent a bay, an open field respective a piece of woodland. It is assumed that these different types of surfaces' influence on the radar altitude measurement can be described by means of three different measurement noise models, each including at least one characteristic parameter, namely N_{gnd}(A), N_{gnd}(B) and N_{gnd}(C) respectively. A first area A_{xy} defined by certain geographical coordinates, which approximately correspond to the extension of the bay is allocated a first surface noise model N_{gnd}(A) that reflects a typical measurement noise for a "water surface". Equally, a second area B_{xy} defined by coordinates, which approximately correspond to the extension of the open field is allocated a measurement noise model N_{gnd}(B) that reflects a typical measurement noise for "open terrain" respective a third area C_{xy} defined by coordinates, which approximately correspond to the extension of the piece of woodland is allocated a measurement noise model N_{gnd}(C) that reflects a typical measurement noise for "woodland". Each of the measurement shells setᵢ and setᵢ₊₁ respective the cut volume set_{i|i+1}, which were discussed with reference to the figures 1-3 can thus include an arbitrary number of different measurement noise models for modeling the measurement noise within the geographical areas covered by the shells.

In order to further elucidate the method according to this embodiment of the invention, an upper measurement shell limit Sᵤ and a lower measurement shell limit S_{d} are shown, which are applied when performing a radar altitude measurement from an aircraft 500, whereby a measured radar distance h_{gnd} to the ground is obtained. The radar distance h_{gnd} represents a preliminary height hₒ at which the aircraft 500 initially is presumed to be positioned. The preliminary height hₒ corresponds to a deviation Δ equal to zero in the diagrams 4a-c, while the upper measurement shell limit Sᵤ and a lower measurement shell limit S_{d} are given by the upper maximum deviation Δᵤ respective the lower maximum deviation Δ_{d}. As mentioned earlier, the latter two can be set to infinitive values. In practice, however, it is usually reasonable to allocate these parameters substantially lower values. The probability function between the upper measurement shell limit Sᵤ and a lower measurement shell limit S_{d} is nevertheless always described by the shape of the respective diagram 401, 402 and 403. Although in certain cases, it can be sufficient to approximate the probability function with a rectangular distribution between the upper Sᵤ and the lower S_{d} measurement shell limits. Figure 5 schematically shows how the noise/uncertainty in the radar altitude measurement caused by the surface varies depending on the type of surface according to the invention.

If instead a static model had been used when estimating the surface noise, the distance between the upper measurement shell limit Sᵤ and a lower measurement shell limit S_{d} would have been constant throughout the entire terrain segment.

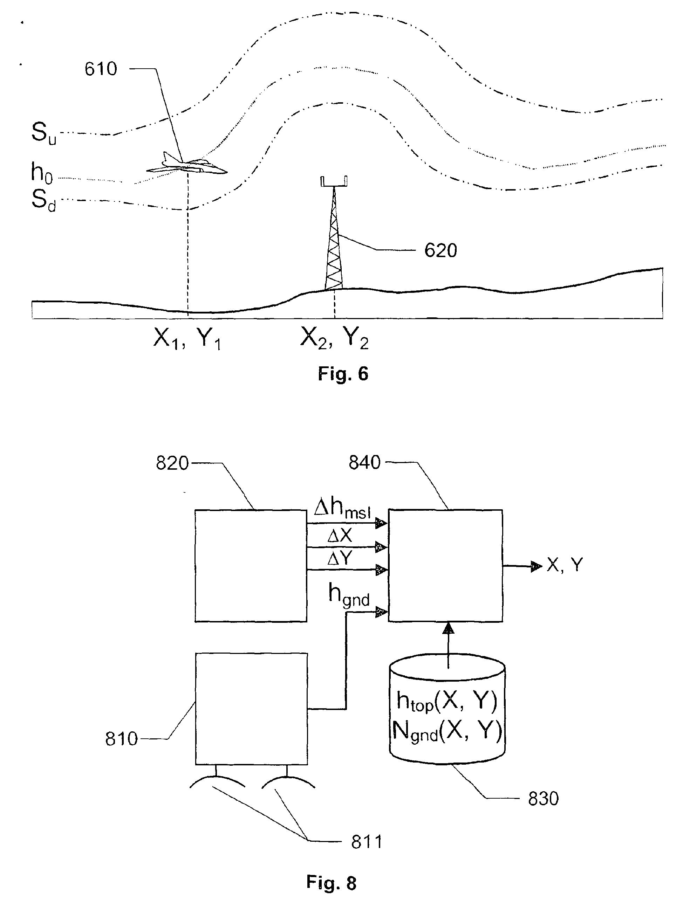

Figure 6 illustrates a method for modeling the surface noise that is caused when performing a radar altitude measurement according to a second embodiment of the invention. An aircraft 610 is here presumed to be positioned at a height h₀ at a first position X₁, Y₁, some distance from a mast 620 at a second position X₂, Y₂. Since the radar employed to accomplish the radar altitude measurement has a relatively large lobe angle also objects that are not located straight below the radar risk generating such strong radar reflexes (or echoes) that they are interpreted as ground reflexes. The degree of influence from this effect, of course, depends on the distance to the object and its characteristics, for example its shape, surface structure and material. Metal constructions, such as lattice masts and lamp posts, generally generate stronger echoes than objects of materials with lower reflectivity, such as wood or stone. The figure demonstrates how a probability function models the known mast 620 and thereby height shifts an upper measurement shell limit Sᵤ and a lower measurement shell limit S_{d} to a relevant degree for geographical coordinates in proximity to the mast 620. In practice, this shift of the measurement shell limits involves a height compensation with respect to the mast's 620 expected influence on radar signals that are sent out in connection with radar altitude measurements in the vicinity of the mast 620. The compensation is largest immediately above the mast 620, i.e. at the second geographical position X₂, Y₂. The magnitude of the compensation then decreases according to a specified relationship depending on the distance to the mast 620.

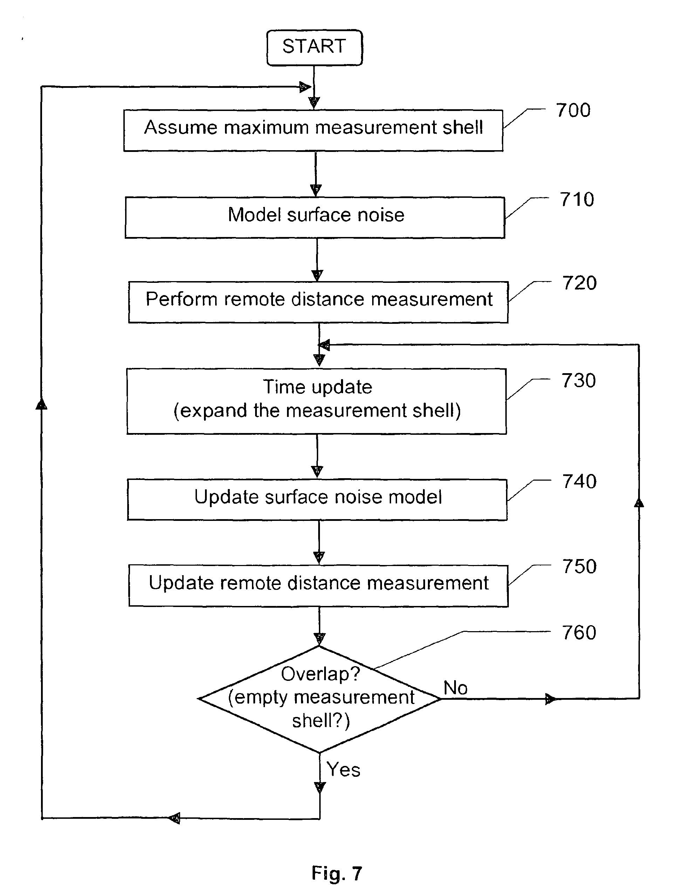

Figure 7 includes a flow chart, which illustrates the general method according to the invention being applied when a craft navigates with aid of remote distance measurement against a surface. A first step 700 assumes a measurement shell of maximum size as in the first procedure step described with reference to figure 1 above. A following step 710 models the noise, which the surface is expected to cause when performing a remote distance measurement against the surface in question.

A step 720 thereafter performs a remote distance measurement whereby a distance between the craft and the surface is obtained. A subsequent step 730, time updates the measurement shell with respect to the craft's movement, i.e. expands the shell. A following step 740 also updates the model for the surface noise because the surface below the craft can now be of a different type than when the previous remote distance measurement was performed. A next step 750 executes a renewed remote distance measurement and the measurement shell can be reduced according to the procedure described with reference to figure 3 above. Then, a step 760 investigates whether the measurement shell has been reduced to an empty volume, i.e. whether there is an overlap between the previous measurement shell and the latest measurement shell. Provided that these shells overlap the position can be determined with an increased accuracy and the procedure is returned to the step 730 for a time update. Otherwise, the procedure is returned to the first step 700, where a maximum sized measurement shell again is assumed.

The above-described method steps are preferably controlled by a computer and can thus be realized in software code. Naturally, such code can be stored on arbitrary computer readable medium, be transferred via any kind of transmission medium and format and be stored into the primary memory of a general computer.

Figure 8 schematically illustrates an embodiment of an apparatus according to the invention. The apparatus comprises a remote distance meter 810, which typically constitutes a radar, but equally well may be a laser distance meter or an acoustic distance meter, such as a sonar. The remote distance meter 810 in turn includes at least one means 811 for transmission and reception of measurement signals. The at least one means 811 is thus a radar antenna, a laser and a sensor or corresponding sonar sensors. According to a preferred embodiment of the invention, the remote distance meter 810 is equipped with two separate means 811 for transmission respective reception of signals. The remote distance meter 810 delivers values of measured distances h_{gnd} between the craft and the surface over which it travels to a control unit 840. The control unit 840 also receives signals Δhₘₛₗ, ΔX and ΔY from a movement meter 820, which represents estimations of the craft's movement in space.

In those cases when the craft travels above the sea level the movement meter 820 normally includes a barometric sensor, inertial gyros, accelerometers and/or a GPS-receiver (GPS = Global Positioning System). When navigating under water, the movement meter 820 instead preferably includes a pressure meter designed to measure the pressure of the water that surrounds the craft plus, for example, inertial gyros and accelerometers. When navigating a craft at sea level (i.e. typically a surface ship) it is normally sufficient if the movement meter 820 includes sensors for registering horizontal movements, i.e. two-dimensional inertial gyros and accelerometers for example. In addition to the measured distance h_{gnd} and the signals Δ-hₘₛₗ, ΔX and ΔY from the movement meter 820, the control unit 840 retrieves topographical data hₜₒₚ(X,Y) and measurement models N_{gnd}(X,Y) for relevant geographical positions from a database 830.

Based on the signals Δh_{msl,} ΔX and ΔY, h_{gnd}, the topographical data hₜₒₚ(X,Y) and the measurement models N_{gnd}(X,Y) from the movement meter 820, the remote distance meter 810 respective the database 830, the control unit 840 then calculates the craft's position according to the proposed method.

Naturally, the present invention does not preclude that parameters in addition to the suggested measurement model are used in order to describe the measurement errors, which are expected to occur during remote distance measurement. In particular, it is not precluded that the invention be combined with a solution where a measurement correction parameter is utilized for modeling the measurement conditions at different geographical positions and heights with respect to a craft mounted remote distance meter's inclination to measure a shortest distance between the craft and the surface over which the craft moves in a undesired angle towards the surface.

## Claims

1. A method for navigating a craft by means of remote distance measurement comprising the steps of:
measuring a distance between the craft and a surface over which the craft moves,
registering a relative movement of the craft,
retrieving topographical information pertaining to the vertical distance between the surface and the mean sea level at certain geographical positions, and
combining the distance and the relative movement with the topographical information for determining a geographical position, **characterized in that**
the remote distance measurement employs a measurement noise model which for each geographical position designates an estimation of the surface's inclination to cause measurement noise when performing a distance measurement.

2. A method according to claim 1, wherein the measurement noise model includes a probability function which designates a statistical relationship between a measured distance and a corresponding actual distance.

3. A method according to claim 2, wherein the probability function models known objects being located on the surface.

4. A method according to claim 3, wherein the probability function represents the probability of the occurrence of a measurement error when performing a remote distance measurement at a first geographical position due to an object located at a second geographical position.

5. A method according to claim 4, wherein the first geographical position is identical with the second geographical position.

6. A method according to any one of the claims 2-5, wherein the probability function models a particular type of surface with a specific estimated capability of reflecting the signals being utilized to perform the remote distance measurement.

7. A method according claim 6, wherein the probability function represents the probability of the occurrence of a measurement error when performing remote distance measurement at a geographical position within a particular geographical area being due to a measurement error caused by the surface generating a signal reflex at a different distance than at the actual distance between the craft and the surface.

8. A computer program directly loadable into the internal memory of a computer, comprising software for performing the steps of any of the claims 1-7 when said program is run on the computer.

9. A computer readable medium, having a program recorded thereon, where the program is to make a computer perform the steps of any of the claims 1-7.

10. An apparatus for navigating a craft by means of remote distance measurement comprising:
a remote distance meter measuring a distance between the craft and a surface,
a movement meter measuring a relative movement of the craft,
a database including topographical information pertaining to the vertical distance between the surface and the mean sea level at certain geographical positions, and
a control unit calculating the craft's geographical position based on a combination of the distance and the relative movement with the topographical information, **characterized in that** the database stores a measurement noise model which for each geographical position designates an estimation of the surface's inclination to cause measurement noise when performing the distance measurement, the control unit takes the measurement noise model into account when calculating the craft's geographical position

11. An apparatus according to claim 10, wherein the measurement noise model includes a probability function which designates a statistical relationship between a measured distance and a corresponding actual distance.

12. An apparatus according to any one of the claims 10 or 11, wherein the probability function models known objects being located on the surface.

13. An apparatus according to claim 10, wherein the probability function models a particular type of surface with a specific estimated capability of reflecting the signals being utilized to perform the remote distance measurement.

## Patentansprüche

1. Verfahren zum Navigieren eines Flugzeugs mittels Fern-Distanzmessung, das die folgenden Schritte umfasst:
Messen einer Distanz zwischen dem Flugzeug und einer Oberfläche, über die sich das Flugzeug bewegt,
Registrieren einer relativen Bewegung des Flugzeugs,
Abrufen topografischer Informationen bezüglich der vertikalen Distanz zwischen der Oberfläche und der mittleren Meereshöhe an bestimmten geografischen Positionen, und
Kombinieren der Distanz und der relativen Bewegung mit den topografischen Informationen, um eine geografische Position zu bestimmen, **dadurch gekennzeichnet, dass**
die Fern-Distanzmessung ein Messungs-Rauschmodell verwendet, das für jede geografische Position einen Schätzwert der Oberflächenneigung angibt, die Messungs-rauschen verursacht, wenn eine Distanzmessung durchgeführt wird.

2. Verfahren nach Anspruch 1, wobei das Messungs-Rauschmodell eine Wahrscheinlichkeitsfunktion einschließt, die eine statistische Beziehung zwischen einer gemessenen Distanz und einer entsprechenden tatsächlichen Distanz angibt.

3. Verfahren nach Anspruch 2, wobei die Wahrscheinlichkeitsfunktion bekannte Objekte modelliert, die sich an der Oberfläche befinden.

4. Verfahren nach Anspruch 3, wobei die Wahrscheinlichkeitsfunktion die Wahrscheinlichkeit des Auftretens eines Messfehlers beim Durchführen einer Fern-Distanzmessung an einer ersten geografischen Position aufgrund eines Objektes darstellt, das sich an einer zweiten geografischen Position befindet.

5. Verfahren nach Anspruch 4, wobei die erste geografische Position identisch mit der zweiten geografischen Position ist.

6. Verfahren nach einem der Ansprüche 2-5, wobei die Wahrscheinlichkeitsfunktion einen bestimmten Typ Oberfläche mit einer spezifischen geschätzten Fähigkeit zum Reflektieren der Signale modelliert, die verwendet werden, um die Fern-Distanzmessung durchzuführen.

7. Verfahren nach Anspruch 6, wobei die Wahrscheinlichkeitsfunktion die Wahrscheinlichkeit des Auftretens eines Messfehlers beim Durchführen von Fern-Distanzmessung an einer geografischen Position innerhalb eines bestimmten geografischen Gebietes darstellt, der auf einen Messfehler zurückzuführen ist, der **dadurch** verursacht wird, dass die Oberfläche einen Signalreflex an einer anderen Distanz als der tatsächlichen Distanz zwischen dem Flugzeug und der Oberfläche erzeugt.

8. Computerprogramm, das direkt in den internen Speicher eines Computers geladen werden kann und Software zum Durchführen der Schritte nach einem der Ansprüche 1-7 beim Ausführen des Programms auf dem Computer umfasst.

9. Computerlesbares Medium, das ein darauf aufgezeichnetes Programm aufweist, wobei das Programm einen Computer veranlasst, die Schritte nach einem der Ansprüche 1-7 durchzuführen.

10. Vorrichtung zum Navigieren eines Flugzeugs mittels Fern-Distanzmessung, das umfasst:
eine Fern-Distanzmesseinrichtung, die eine Distanz zwischen dem Flugzeug und einer Oberfläche misst,
eine Bewegungs-Messeinrichtung, die eine relative Bewegung des Flugzeugs misst,
eine Datenbank, die topografische Informationen enthält, die sich auf die vertikale Distanz zwischen der Oberfläche und der mittleren Meereshöhe an bestimmten geografischen Positionen beziehen, und
eine Steuereinheit, die die geografische Position des Flugzeugs auf Basis einer Kombination der Distanz und der relativen Bewegung mit den topografischen Informationen berechnet, **dadurch gekennzeichnet, dass**
die Datenbank ein Messungs-Rauschmodell speichert, das für jede geografische Position einen Schätzwert der Oberflächenneigung angibt, die Messungs-Rauschen verursacht, wenn die Distanzmessung durchgeführt wird, wobei die Steuereinheit das Messungs-Rauschmodell beim Berechnen der geografischen Position des Flugzeugs berücksichtigt.

11. Vorrichtung nach Anspruch 10, wobei das Messungs-Rauschmodell eine Wahrscheinlichkeitsfunktion einschließt, die eine statistische Beziehung zwischen einer gemessenen Distanz und einer entsprechenden tatsächlichen Distanz angibt.

12. Vorrichtung nach einem der Ansprüche 10 oder 11, wobei die Wahrscheinlichkeitsfunktion bekannte Objekte modelliert, die sich an der Oberfläche befinden.

13. Vorrichtung nach Anspruch 10, wobei die Wahrscheinlichkeitsfunktion einen bestimmten Typ Oberfläche mit einer spezifischen geschätzten Fähigkeit zum Reflektieren der Signale modelliert, die zum Durchführen der Fern-Distanzmessung verwendet werden.

## Revendications

1. Méthode de navigation d'une embarcation au moyen d'une mesure de distance éloignée comprenant les étapes consistant à :
◆ mesurer une distance entre l'embarcation et une surface sur laquelle l'embarcation se déplace,
◆ enregistrer un mouvement relatif de l'embarcation,
◆ récupérer des informations topographiques concernant la distance verticale entre la surface et le niveau moyen de la mer à certaines positions géographiques, et
◆ combiner la distance et le mouvement relatif avec les informations topographiques pour déterminer une position géographique,
**caractérisée en ce que**
la mesure de distance éloignée emploie un modèle de bruit de mesure qui, pour chaque position géographique, désigne une estimation de l'inclinaison de surface pour induire un bruit de mesure lors de la réalisation d'une mesure de distance.

2. Méthode selon la revendication 1, dans laquelle le modèle de bruit de mesure comprend une fonction de probabilité qui désigne une relation statistique entre une distance mesurée et une distance effective correspondante.

3. Méthode selon la revendication 2, dans laquelle la fonction de probabilité modélise des objets connus qui sont situés sur la surface.

4. Méthode selon la revendication 3, dans laquelle la fonction de probabilité représente la probabilité de l'occurrence d'une erreur de mesure lors de la réalisation d'une mesure de distance éloignée en une première position géographique due à un objet situé en une seconde position géographique.

5. Méthode selon la revendication 4, dans laquelle la première position géographique est identique à la seconde position géographique.

6. Méthode selon l'une quelconque des revendications 2 à 5, dans laquelle la fonction de probabilité modélise un type particulier de surface avec une capacité estimée spécifique de réfléchir les signaux qui sont utilisés pour effectuer la mesure de distance éloignée.

7. Méthode selon la revendication 6, dans laquelle la fonction de probabilité représente la probabilité de l'occurrence d'une erreur de mesure lors de la réalisation d'une mesure de distance éloignée en une position géographique dans une zone géographique particulière qui est due à une erreur de mesure provoquée par la surface générant une réflexion de signal à une distance différente de la distance effective entre l'embarcation et la surface.

8. Programme informatique pouvant être directement chargé dans la mémoire interne d'un ordinateur, comprenant un logiciel destiné à effectuer les étapes selon l'une quelconque des revendications 1 à 7, dans lequel ledit programme est exécuté sur l'ordinateur.

9. Support lisible par ordinateur, sur lequel est enregistré un programme, où le programme consiste à faire réaliser à un ordinateur les étapes de l'une quelconque des revendications 1 à 7.

10. Appareil de navigation d'une embarcation au moyen d'une mesure de distance éloignée comprenant :
◆ un dispositif de mesure de distance mesurant une distance entre l'embarcation et une surface,
◆ un dispositif de mesure de mouvement mesurant un mouvement relatif de l'embarcation,
◆ une base de données comprenant des informations topographiques concernant la distance verticale entre la surface et le niveau moyen de la mer à certaines positions géographiques, et
◆ une unité de commande calculant la position géographique de l'embarcation en se basant sur une combinaison de la distance et du mouvement relatif avec les informations topographiques,
**caractérisé en ce que**
la base de données stocke un modèle de bruit de mesure qui, pour chaque position géographique, désigne une estimation de l'inclinaison de surface pour induire un bruit de mesure lors de la réalisation de la mesure de distance, l'unité de commande prend le modèle de bruit de mesure en compte lors du calcul de la position géographique de l'embarcation.

11. Appareil selon la revendication 10, dans lequel le modèle de bruit de mesure comprend une fonction de probabilité qui désigne une relation statistique entre une distance mesurée et une distance effective correspondante.

12. Appareil selon l' une quelconque des revendications 10 ou 11, dans lequel la fonction de probabilité modélise des objets connus qui sont situés sur la surface.

13. Appareil selon la revendication 10, dans lequel la fonction de probabilité modélise un type particulier de surface avec une capacité estimée spécifique de réfléchir les signaux utilisés pour effectuer la mesure de distance éloignée.
